# EUROPEAN PATENT APPLICATION

(11) **EP 1 676 656 A1**
(43) Date of publication of application: **05.07.2006**
(21) Application number: 04793762.8
(22) Date of filing: 12.10.2004
(51) Int. Cl.: B21J 13/02, B21J 7/16

(54) **FOUR-HAMMER FORGING DEVICE**

(30) Priority: 23.10.2003 RU 2003131236
(71) Applicant: Joint Stock Company Chepetskiy Mechanical Plant (JSC CVP), Glazov 427620 Udmurt Republic (RU)
(72) Inventor: ROZHDESTVENSKIY, Vladimir Vladimirovich, Glazov, Udmurt Republic, 427620 (RU); AHTONOV, Sergey Gennadjevich, Glazov, Udmurt Republic, 427628 (RU); LAZORKIN, Victor Andreevich, Zaporozhie, 69097 (UA); LAZORKINA, Svetlana Alexandrovna, Zaporozhie, 69097 (UA); LOSITSKIY, Anatoliy Frantsevich, Glazov, Udmurt Republic, 427620 (RU); NOZDRIN, Igor Viktorovich, Glazov, Udmurt Republic, 427620 (RU); PHILIPPOV, Vladimir Borisovich, Glazov, Udmurt Republic, 427620 (RU); CHEREMNYCH, Gennadiy Sergeevich, Glazov, Udmurt Republic, 427620 (RU)
(74) Representative: Gritschneder, Martin
(86) International application number: PCT/RU2004/000399
(87) International publication number: WO 2005/039802

(57) **Abstract**

The invention relates to metal forming and can be used for forging billets and blanks by means of hydraulic forging presses. The inventive device comprises two holders for top and lower hammers and two holders for side hammers which are cinematically connected thereto. Each top and lower hammer is provided with two working surfaces separated by a recess in which the working surfaces of the side hammers penetrate. At least one adjusting plate is arranged between the lower hammer and the holder thereof. Said lower hammer is fixed to the holder by two L-shaped clamps which are pressed by the inclined faces thereof against the inclined faces of the lower hammer holder and by the wavy faces thereof against two friction plates which are made, for example of copper and fixed to the side surfaces on the lower hammer. Pins which are fixed in the lower hammer pass through the holes of the adjusting plates and penetrate into the holes of the lower hammer holder.

## Description

### Field of the Invention

The invention relates to metal forming and more particularly to four-hammer forging devices and may be used for forging ingots and blanks on hydraulic forging presses.

It may be used in mechanical engineering and the metallurgy industry for producing forgings and elongated-axis products of circular, round and rectangular cross-sections from structural, tooling, stainless, heat-resistant and other hardly-deformed steels and alloys.

### Description of Prior Art

A tooling for radial forging of bar blanks is known, which comprises four hammers, wherein two of them have two working sections each, which are separated by a notch, and the other two have one working section each, which enters the notches on the first pair of the hammers. (see, *Forging on Radial Squeezing Machines.* V.A. Tyurin, V.A. Lazorkin, I.A. Pospelov et al., Ed. by V.A. Tyurin. Moscow, Mashinostroyenie Publishers, 1990, p. 13-16).

The said tooling enables to produce high quality forgings of rectangular cross-section in a wide range of dimensions on radial forging machines which provide for adjustment of the hammer closed height.

It is thought that a disadvantage of the said tooling is the impossibility of using it in known four-hammer forging devices on hydraulic forging presses with the effect similar to that achieved on radial forging machines. It is due to the fact that four-hammer forging devices used on hydraulic forging presses lack separate adjustment of the hammer closed height for every pair of hammers. Therefore, by using the said tooling in such a four-hammer forging device it is possible to produce forgings of rectangular cross-section only in a narrow range of dimensions.

A four-hammer forging device is also known in the art, which comprises two holders of the upper and the lower hammers with inclined surfaces; two holders of the side hammers, wherein the holders have kinematical connection with the first two holders and the side hammers have inclined surfaces corresponding to the inclined surfaces of the said holders of the upper and the lower hammers; and four hammers fastened to the hammer holders with clamps and tightening studs. (See Ukraine Patent # 34978 A, B2 J 1/04, B2 J 13/02. Published in the Invention Gazette # 2/2001.) A disadvantage of the said device is that it does not provide for adjusting the hammer closed height, and, consequently, it may not be used for producing forgings of rectangular cross-section in a wide range of dimensions with one set of hammers.

### Summary of the Invention

The present invention solves the task of ensuring the possibility for producing forgings in a wide range of dimensions by using only one set of hammers, which, in its turn, will result in lowering costs for making the necessary tooling and shortening the time required for its readjustment.

The stated task can be solved by that a four-hammer forging device, which comprises two holders of the upper and the lower hammers with inclined surfaces; two holders of the side hammers, wherein the holders have kinematical connection with the first two holders and the side hammers have inclined surfaces corresponding to the inclined surfaces of the said holders of the upper and the lower hammers; and four hammers fastened to the hammer holders with clamps and tightening studs, wherein the first two of them, namely the upper hammer and the lower hammer, have two working sections each, which are separated by a notch, and the other two, namely the side hammers, have one working section each, which enters the notches on the upper hammer and the lower hammer; in order to expand the range of blank cross-sections, according to the claimed invention, one or more adjusting plates are installed between the lower hammer holder and the lower hammer itself, the lower hammer is fastened to the lower hammer holder with two L-shaped clamps which on one side are pressed by their inclined surfaces against the inclined surfaces of the lower hammer holder and on the other side against two friction plates fastened to the side surfaces of the lower hammer. Pins, which are fastened in the lower hammer, pass through holes in the adjusting plates, enter holes in the lower hammer holder and are intended for centering the adjusting plates.

Making the friction plates of copper contributes to the fulfillment of the stated task.

### Brief Description of the Drawings

FIG. 1 shows a schematic front view of the four-hammer forging device according to the present invention.
FIG. 2 shows an A-A section of the four-hammer forging device which is shown in FIG. 1.
FIG. 3 shows the four-hammer forging device used for forming a forging of rectangular cross-section, wherein the forging cross-section is cross-hatched.

FIG. 4 shows a plot of the A=ƒ(B) function for a set of hammers without adjusting the raising height of the lower hammer, where A is the bar length, and B is the bar width.

FIG. 5 shows plots of the A=ƒ(B) and A=ƒ'(B) functions for a set of hammers with the adjustable raising height of the lower hammer.

### Description of the Preferred Embodiment

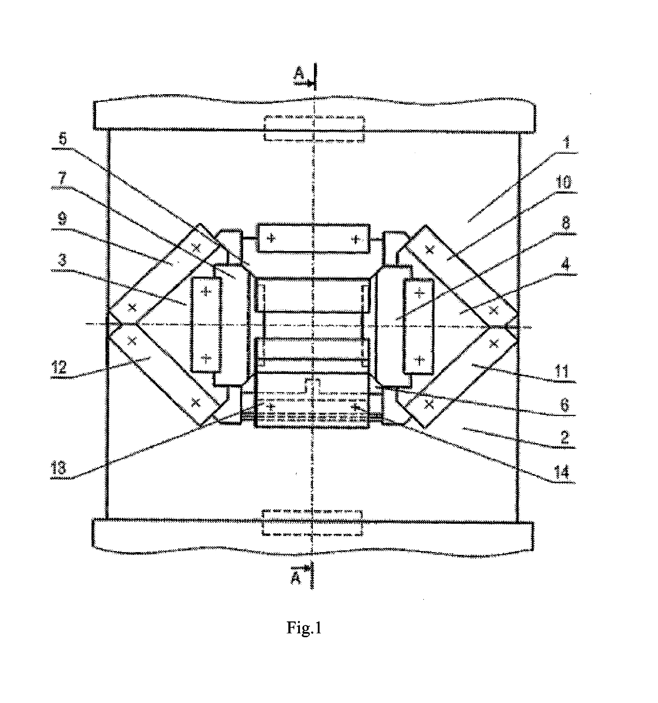

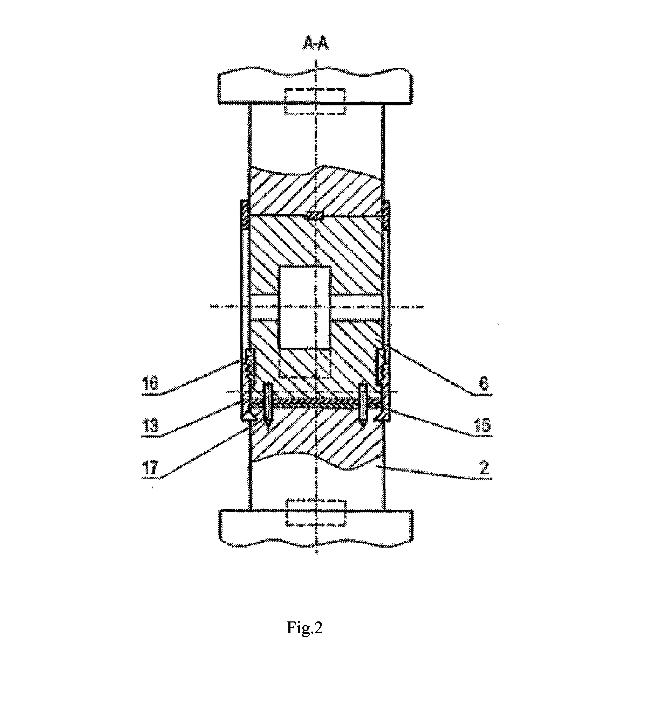

The four-hammer forging device comprises the upper hammer holder 1, the lower hammer holder 2, the side hammer holders 3 and 4, the upper hammer 5, the lower hammer 6, the side hammers 7 and 8, the guides 9 through 12 (FIG. 1). The hammers are fastened to the hammer holders by the clamps 13 and the tightening studs 14. At least one adjusting plate 15 is installed between the lower hammer holder 2 and the lower hammer 6 (FIG. 2). The clamps 13, which hold the lower hammer 6, are L-shaped (FIG. 2). From one side the clamps 13 are pressed with their inclined surfaces against the inclined surfaces of the lower hammer holder 2, and from the other side they are pressed with their corrugated surfaces against the friction plates 16 fastened with screws to the side surfaces of the lower hammer 6 (FIG. 2). The pins 17 are secured in the lower hammer 6 and pass through holes in the adjusting plates 15, entering (by slide fit) into holes of the lower hammer holder for centering the adjusting plates 15 (FIG. 2). In addition, the pins 17 prevent the lower hammer from moving toward the longitudinal axis relative to the lower hammer holder during forging. Out of the four hammers 5 through 8, which are fastened to the hammer holders 1 through 4 by clamps and studs, two hammers, namely, the upper one and the lower one, have two working sections each, and the other two hammers, namely the side ones, have one working section each, which enters into the notches of the upper hammer and the lower hammer (FIG. 1, 2).

The four-hammer forging device operates as follows.

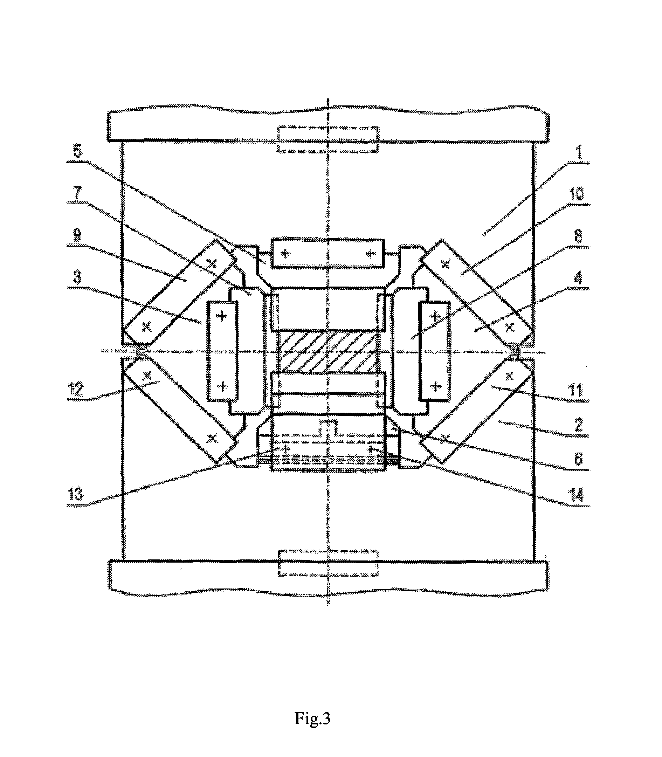

The four-hammer forging device, as assembled for producing forgings of a definite size and rectangular cross-section, is installed into the working area of a press, and the press is switched on. When the movable cross bar together with the upper plate goes up, the upper hammer holder 1, which is fastened to the upper plate of the press, also moves up together with the upper hammer 5. At the same time, with the use of the guides 9 through 12, the upper hammer holder 1 moves apart the side hammer holders 3 and 4 together with the side hammers 7 and 8, thus opening the working area of the device (FIG. 1, 3). Then a blank is fed by a manipulator (not shown) into the space between the hammers 5, 6, 7 and 8. After this the press working stroke is switched on, at which the movable cross bar of the press moves the upper hammer holder 1 together with the hammer 5 towards the blank (this is shown by the cross-hatched area of the cross-section) and together with the hammer 6 squeezes it in its vertical plane (FIG. 3). At the same time, with the use of its inclined surfaces, the upper hammer holder 1 moves the holders 3 and 4 of the side hammers 7 and 8 towards the blank, which squeeze it in the radial and tangential directions. When squeezing of the blank is completed, the cross bar of the press goes up, thus opening the device, and the squeezing cycle is repeated.

If it is necessary to produce rectangular forgings of other dimensions, the device can be disconnected from the upper cross bar of the press by issuing the respective command from the control panel. The forging device is moved out of the press working area with the use of the tool table. Then, after removing the tightening studs 14, the L-shaped clamps which hold the lower hammer 6 are removed, the lower hammer is lifted, and the adjusting plate 15 is changed (FIG. 1, 2).

After that the hammer 6 is lowered onto the adjusting plate 15, the L-shaped clamps 13 are installed, using the tightening studs 14, ensuring that the inclined surfaces of the clamps 13 are pressed against the inclined surfaces of the lower hammer holder 2 and on the other side their corrugated surfaces are pressed against the friction plates 16 (FIG. 1, 2). The friction plates 16 are installed in slots defmed on the side surfaces of the lower hammer 6 and are fixed with the use of screws (FIG. 2). For centering the adjusting plates 15 the guiding pins 17 are provided which are secured (pressed into) the lower hammer 6.

After installing the required adjusting plates 15, the hammer 6 is lowered until its contacting the adjusting plates. At that the guiding pins 17 enter the respective holes in the adjusting plates 15, thus centering them, and then into the respective holes in the lower hammer holder 2. The pins 17 are also used for preventing the lower hammer 6 from moving relative to the lower hammer holder 2 at high axial loads (FIG. 2). The friction plates are made of soft metal, e.g., of copper. When tightening the studs holding the L-shaped clamps 13 the latter penetrate with their corrugated surfaces into the soft friction plates, thus creating secure engagement with them and preventing a vertical movement of the lower hammer 6 (FIG. 2).

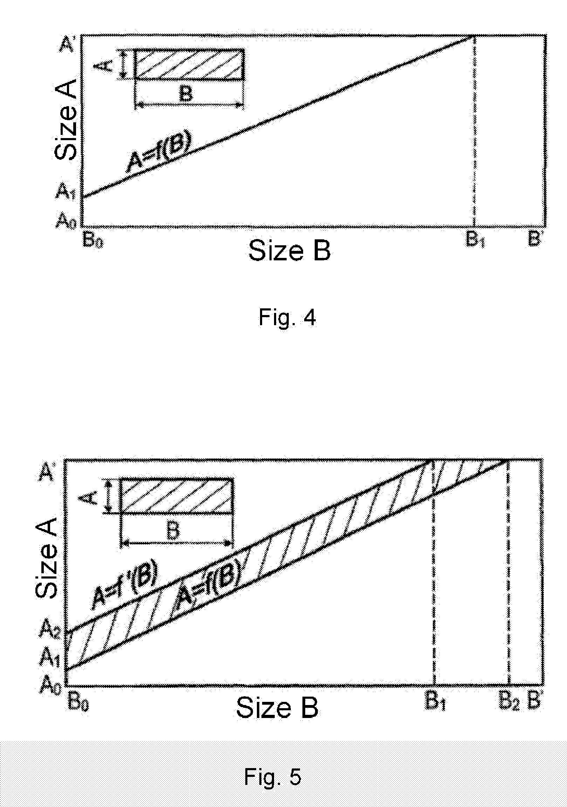

By using one set of hammers, without adjusting the raising height of the lower hammer, it is possible to produce forgings which cross-section dimensions are on the plot of the A=ƒ(B) function, as shown in FIG. 4. The bar thickness may vary in the range from A₁ to A' size, and its width - from B₀ to B₁ size (FIG. 4).

Bu using the claimed forging device with the raising height of the lower hammer regulated with the use of adjusting plates it is possible to produce forgings which cross-section dimensions are between the plots of the A=ƒ(B) and A=ƒ'(B) functions in the cross-hatched area (FIG. 5). The size Δ=A₂-A₁ corresponds to the maximum raising height of the lower hammer, as achieved with the use of adjusting plates.

Thus, the claimed invention, due to changing the closed height of the hammers, ensures the possibility of producing forgings of rectangular cross-section in a wider range of sizes by using one set of hammers, as compared to the four-hammer forging device taken as the prototype. This enables to lower the costs of making the tooling as well as shorten the time required for its readjustment when switching from bars of one size to another by 30-40 per cent.

The present invention may be best utilized for producing forgings of rectangular cross-section.

## Claims

1. A four-hammer forging device comprising two holders of the upper and the lower hammers with inclined surfaces, two holders of side hammers, wherein said holders have kinematical connection with the first two holders and said side hammers have inclined surfaces corresponding to the inclined surfaces of the said holders of the upper and the lower hammers; and four hammers fastened to the hammer holders with clamps and tightening studs, wherein the first two of them, namely the upper hammer and the lower hammer, have two working sections each, which are separated by a notch, and the other two, namely the side hammers, have one working section each, which enters the notches on the upper hammer and the lower hammer, **characterized in that** one or more adjusting plates are installed between the lower hammer holder and the lower hammer itself, the lower hammer is fastened to the lower hammer holder with two L-shaped clamps which on one side are pressed by their inclined surfaces against the inclined surfaces of the lower hammer holder and on the other side against two friction plates fastened to the side surfaces of the lower hammer, and pins, which are fastened in the lower hammer, pass through holes in the adjusting plates and enter holes in the lower hammer holder.

2. The four-hammer forging device according to Claim 1, **characterized in that** said friction plates are made of copper.
